**Europäisches Patentamt**

**European Patent Office**

**Office européen des brevets**

(19)

(11) Veröffentlichungsnummer : **0 003 853**
**B1**

(12) **EUROPÄISCHE PATENTSCHRIFT**

(45) Veröffentlichungstag der Patentschrift :
**11.11.81**

(51) Int. Cl.³ : **C 22 B 5/08**

(21) Anmeldenummer : **79200059.8**

(22) Anmeldetag : **05.02.79**

(54) Verfahren zur kontinuierlichen Konvertierung von NE-Metallsulfidkonzentraten.

(30) Priorität : 24.02.78 DE 2807964

(43) Veröffentlichungstag der Anmeldung :
05.09.79 (Patentblatt 79/18)

(45) Bekanntmachung des Hinweises auf die Patenterteilung : 11.11.81 Patentblatt 81/45

(84) Benannte Vertragsstaaten :
BE DE FR GB IT SE

(56) Entgegenhaltungen :
DE - A - 2 146 434
DE - A - 2 322 516
DE - B - 1 483 154
DE - B - 2 156 041
DE - B - 2 417 978
US - A - 3 460 817

(73) Patentinhaber : METALLGESELLSCHAFT AG
Reuterweg 14 Postfach 3724
D-6000 Frankfurt/M.1 (DE)

(72) Erfinder : Schwartz, Werner, Dr.
Kellerbornstrasse 7
D-6000 Frankfurt am Main 50 (DE)
Erfinder : Fischer, Peter, Dr.
Taunusstrasse 10
D-6368 Bad Vilbel 4 (DE)
Erfinder : Traulsen, Heinrich, Dr.
Sachsenhausener Strasse 23
D-6231 Schwalbach (DE)

(74) Vertreter : Fischer, Ernst, Dr.
Reuterweg 14
D-6000 Frankfurt am Main 1 (DE)

EP 0 003 853 B1

Imprimerie Jouve, 17, rue du Louvre, 75001 Paris, France

### Verfahren zur kontinuierlichen Konvertierung von NE-Metallsulfidkonzentraten

Die Erfindung betrifft ein Verfahren zur kontinuierlichen Konvertierung von NE-Metallsulfidkonzentraten in eine flüssige NE-metallreiche Phase und eine Schlackenphase in einem länglichen, liegenden Reaktor, unter einer zonenweise $SO_2$-enthaltenden Gasatmosphäre, wobei sulfidische Konzentrate von Kupfer, Nickel, Antimon, Kobalt und Blei oder deren Mischungen und Zuschläge auf die Schmelze chargiert werden, oxydierende und reduzierende Gase in die Schmelze eingeblasen werden, die NE-metallreiche Phase und eine NE-metallarme Schlackenphase am entgegengesetzten Ende des Reaktors ausgetragen und die Phasen in Gegenstrom zueinander in im wesentlichen kontinuierlich schichtförmigen Strömen zu den Auslaßenden fließen, mindestens ein Teil des Sauerstoffs durch eine Mehrzahl von unabhängig voneinander gesteuerten und über die Länge der Oxydationszone des Reaktors verteilten Düsen in die Schmelze von unten eingeblasen wird, die feste Beschickung durch eine Mehrzahl von unabhängig voneinander gesteuerten und über eine beträchtliche Länge des Reaktors verteilten Beschickungsvorrichtungen stufenweise in den Reaktor chargiert wird, der Gradient der Sauerstoffaktivität in der Schmelze durch Wahl der örtlichen Zugabe und Steuerung der Mengen des eingeführten Sauerstoffs und festen Materials so eingestellt wird, daß er von einem Maximum für die Erzeugung von NE-metallreichem und eisenarmem Material an dessen Auslaßende in fortschreitender Folge in der Reduktionszone bis zu einem Minimum für die Erzeugung von NE-metallarmer Schlackenphase an deren Auslaßende abnimmt, mit dem Sauerstoff gasförmige und/oder flüssige Schutzmedien in gesteuerten Mengen zum Schutz der Düsen und der umgebenden Auskleidung und zur Hilfe für die Steuerung der Prozeßtemperatur in die Schmelze eingeblasen wird, und die in die Schmelze eingeblasenen Gasmengen so geregelt werden, daß eine für einen guten Stoffaustausch ausreichende Turbulenz im Bad entsteht, ohne daß die schichtförmige Strömung der Phasen und der Gradient der Sauerstoffaktivität im wesentlichen gestört wird.

In der DE-B-24 17 978 ist ein Verfahren gemäß der Einleitung beschrieben. Bei diesem Verfahren wird die Gasatmosphäre im Reaktor im Gleichstrom zu der Strömungsrichtung der Schlackenphase geführt und das Abgas am Auslaßende der NE-metallarmen Schlackenphase aus dem Reaktor abgeleitet. Außerdem wird das Verfahren autogen durchgeführt.

Der Erfindung liegt die Aufgabe zugrunde, den Metallgehalt der Schlackenphase noch weiter zu senken, die Wärmeausnutzung im Reaktor zu verbessern und eine Zusatzbeheizung zu ermöglichen.

Die Lösung der Aufgabe erfolgt erfindungsgemäß dadurch, daß die Gasatmosphäre im Reaktor im Gegenstrom zu der Strömungsrichtung der Schlackenphase geführt und das Abgas am Auslaßende der NE-metallreichen Phase aus dem Reaktor abgezogen wird. Die Abgase können sowohl durch die Stirnseite des Reaktors als auch nahe der Stirnseite nach oben oder seitlich abgeführt werden. Der Prozeß wird im Hinblick auf die Steuerung des Gradienten der Sauerstoffaktivität und der Temperatur in der Schmelze so gesteuert, wie es in der DE-B-24 17 978 beschrieben ist. Das Sauerstoffpotential in der Gasatmosphäre wird jedoch durch die Gegenstromführung von Schlackenphase und Gasatmosphäre verändert, wobei insbesondere über der Reduktionszone das Sauerstoffpotential und der $SO_2$-Gehalt erheblich verringert werden. Die Düsen können in mehreren Reihen nebeneinander angeordnet werden, so daß die gesamte Breite der Schmelze gut durchgast wird, ohne daß ein Hin- und Herschwenken des Reaktors um seine Längsachse erforderlich ist.

Eine vorzugsweise Ausgestaltung besteht darin, daß mindestens in der Reduktionszone Brennstoffe in die Schmelze eingeblasen werden, der Sauerstoffpartialdruck in der Gasatmosphäre über der Reduktionszone unter $10^{-3}$ bar, vorzugsweise unter $10^{-8}$ bar, gehalten wird und kein $SO_2$ als Schutzgas in die Reduktionszone eingeblasen wird. Der Brennstoff kann flüssig, gasförmig oder fest sein. Seine Verbrennung wird so gesteuert, daß einerseits die erforderliche Wärme erzeugt und andererseits die erforderlichen Reduktionsbedingungen in der Schmelze und in der Gasphase eingehalten werden. Als Schutzgas für die Düsen können Kohlenwasserstoffe dienen, die danach selbst als Brennstoff verwendet werden, oder Inertgase, wie z.B. Stickstoff. In der Oxidationszone kann, wie in der DE-B-24 17 978 beschrieben, $SO_2$ als Schutzgas verwendet werden. Durch das Einblasen des Brennstoffes unmittelbar in die Schmelze wird eine gute Wärmeübertragung auf das Schmelzgut und damit eine hohe Brennstoffausnutzung bei niedrigen Temperaturen des Reaktorgewölbes erreicht. Bei der Verarbeitung von Bleikonzentraten werden bereits bei einem Sauerstoffpartialdruck von $10^{-3}$ bar in der Gasatmosphäre gute Ergebnisse erzielt. Diese Ergebnisse verbessern sich mit geringerem Sauerstoffpartialdruck. Für die Verarbeitung von Kupferkonzentraten muß der Sauerstoffpartialdruck unter $10^{-8}$ bar liegen. Bei dieser Arbeitsweise gelingt es, innerhalb weiter Grenzen die physikalisch-chemisch günstigsten Temperaturen und Bedingungen in jeder Ofenzone einzustellen. Falls die Zufuhr von weiterer Wärme erforderlich ist, insbesondere bei Konzentraten mit geringerem Schwefelgehalt, kann ein Brenner an der Stirnseite der Reduktionszone angeordnet werden und/oder Brennstoff durch Düsen oder zusammen mit der festen Beschickung in die Oxidationszone eingebracht werden. Der Brenner muß so betrieben werden, daß das erforderliche Sauerstoffpotential in der Gasphase eingehalten wird.

Eine vorzugsweise Ausgestaltung besteht darin, daß zwischen der Reduktionszone und der Oxidationszone eine Beruhigungszone geschaltet ist, in die kein Gas in die Schmelze eingeblasen wird. Dadurch wird eine gute Trennung der Gasatmosphäre in der Reduktionszone und der Oxidationszone erzielt, es ist eine individuelle Temperatursteuerung in beiden Stufen möglich, und in der Beruhigungszone erfolgt eine Trennung der sulfidreichen Metallphase von der metallreichen Schlackenphase, wodurch eine niedrige Sulfidaktivität in der Reduktionszone erreicht wird.

Eine vorzugsweise Ausgestaltung besteht darin, daß bei der Verarbeitung von sulfidischen Blei- oder Antimonkonzentraten das im Flugstaub enthaltene Blei- oder Antimonsulfid in der Abgasleitung und/oder Abgaskühlung durch Zumischung von sauerstoffhaltigen Gasen bei Temperaturen von 950 bis 450 °C überwiegend zu Bleisulfat oder Antimonoxid und Antimonsulfat oxidiert, und der abgeschiedene Flugstaub mit dem Blei- oder Antimonkonzentrat in einer Menge von 10 bis 30 Gew.-%, bezogen auf den Einsatz, und eventuell unter Zusatz von anderen metallsulfathaltigen Stoffen gemischt wird. Die Zumischung der oxidierten Flugstäube bewirkt schon bei relativ niedrigen Temperaturen eine Reaktion mit den sulfidischen Konzentraten, ohne daß dazu zusätzlicher Sauerstoff zugeführt werden muß. Der schnelle Umsatz verringert die Verdampfungsverluste von Metallen. Wichtig ist dabei ein enger Kontakt der Beschickungsbestandteile.

Eine vorzugsweise Ausgestaltung besteht darin, daß die Konzentrate sowie eventuell Zuschlagstoffe vor dem Einsatz in den Reaktor kompaktiert werden. Dadurch wird der Kontakt der Konzentrate mit den Zuschlägen, wie Kalk, $SiO_2$, Eisenoxid, rückgeführter Flugstaub und eventuell andere metallsulfathaltige Stoffe und Kohlenstoff, besonders eng. Die Kompaktierung kann z.B. durch Rollieren, Pelletieren oder Pressen erfolgen. Die feuchten, kompaktierten Teilchen fallen schnell durch die Gasatmosphäre und die Reaktion erfolgt in der Schmelze. Durch die Feuchte der Teilchen steigt die Temperatur langsam an, so daß die Verdampfungsverluste gering gehalten werden.

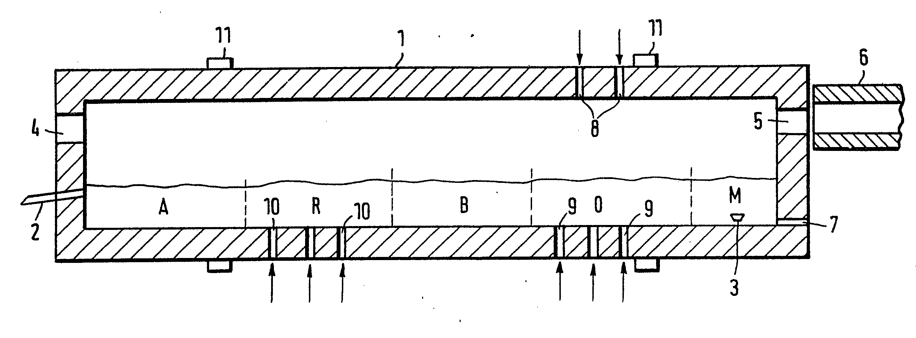

Die Erfindung wird an Hand der Figur und von Beispielen näher und beispielsweise erläutert.

Die Figur zeigt schematisch einen Querschnitt durch einen Reaktor.

Der Reaktor 1 hat die Form eines langen Ofens mit abgerundetem Querschnitt. In der linken Stirnseite ist der Schlackenablauf 2 und in der Nähe der rechten Stirnseite der Abstich 3 für die NE-metallreiche Phase angeordnet. In der linken Stirnseite ist eine Öffnung 4 angebracht, die als Arbeitstür benutzt werden kann oder in der ein Brenner angeordnet werden kann. In der rechten Stirnseite ist die Gasaustrittsöffnung 5 angeordnet, die in den Abgaskanal 6 mündet, sowie ein Notabstich 7. Der Reaktor 1 ist in die Arbeitszone A, Reduktionszone R, Beruhigungszone B, Oxidationszone O und Ruhezone M unterteilt, wobei die Übergänge nicht scharf begrenzt, sondern fließend sind. In der Oxidationszone O sind Chargieröffnungen 8 und Düsen 9 angeordnet, von denen nur einige schematisch dargestellt sind. In der Reduktionszone R sind ebenfalls Düsen 10 angeordnet, von denen nur einige schematisch dargestellt sind. Der Reaktor 1 ist auf Laufringen 11 gelagert und kann zur Wartung gedreht werden.

Ausführungsbeispiele

In einem Versuchsreaktor mit 4,8 m Länge und 1,8 m Durchmesser (Außenmaße) wurden Bleikonzentrate verarbeitet. Die nur begrenzte Länge des Reaktors erlaubt noch keinen kontinuierlichen Betrieb mit Gegenstrom von Blei, Schlacke und Abgas. Deshalb wurden die beiden wesentlichsten Verfahrensschritte : 1) partielle Oxidation des mit Zuschlägen und Flugstaub gemischten und pelletierten Konzentrats zu metallischem Blei und einer PbO-reichen Schlacke durch Einblasen von Sauerstoff in die Schmelze und 2) Reduktion des PbO der Schlacke durch Einführung von Reduktionsmitteln nacheinander ausgeführt.

1) Der Reaktor wurde mit einem Sauerstoff-Propan-Brenner auf eine Innentemperatur von 1 100 °C vorgeheizt. Sodann wurden durch die Brennertür 2,200 t Blei in Barren eingesetzt und eingeschmolzen. In dieses Bad mit einer Temperatur von 1 100 °C wurden nun in einer Menge von 2,04 t/h kontinuierlich ungetrocknete Konzentratpellets, bestehend aus 70 % Bleikonzentrat, 20 % Retourflugstaub und 10 % Flußmitteln chargiert und mit Sauerstoff oxidiert. Die Pellets wiesen neben 8 Gew.-% Feuchte folgende Trockenanalyse in Gew.-% auf :

59,1 Pb ; 2,4 Zn ; 0,96 Cu ; 12,45 S ; 6,8 FeO ; 0,6 $Al_2O_3$ ; 2,4 CaO ; 0,6 MgO und 11,4 $SiO_2$.

Nach Beendigung des Versuches wurde eine Schlacke mit einem Pb-Gehalt von 40,7 Gew.-% abgestochen. Das abgestochene Werkblei enthielt 1,05 Gew.-% S. Es wurde folgende Verteilung des in den Pellets vorlaufenden Bleis (insgesamt 1 546 kg) erhalten :

Werkblei 58,6 %
Schlacke 24,0 %
Flugstaub 17,4 %

Damit betrug die insgesamt abgestochene Bleimenge einschließlich des zuvor eingesetzten Barrenbleis 3,098 t.

a) 1 000 g der vorgenannten Schlacke mit einem Pb-Gehalt von 40,7 Gew.-% wurde in einem Graphittiegel im Tammannofen eingeschmolzen. Sodann wurde durch Aufblasen eines Gasgemisches aus 20 Vol.-% $SO_2$ und 80 Vol.-% $N_2$ in einer Menge von 2,0 l/min (Vn) auf die Oberfläche der Schmelze ein $SO_2$-Partialdruck der Gasatmosphäre von ca. 0,2 bar eingestellt, während die Schlacke durch Einrühren von feingemahlener Kohle in einem 1,5-fachen stöchiometrischen Überschuß reduziert wurde. Die Reduktionstemperatur betrug 1 150 °C. Nach 1 h ständigen Rührens mit einem Graphitstab wurden folgende Produkte erhalten :

588 g Schlacke mit 4,2 Gew.-% Pb
282 g Blei mit 3,4 Gew.-% S.

Damit errechnet sich ein bleiverlust von 110 g entsprechend 27,0 % vom Vorlauf.

b) Ein analoger Versuch, bei dem lediglich 2 l/min (Vn) $N_2$ auf die Schmelzoberfläche aufgeblasen und alle weiteren Bedingungen festgehalten wurden, ergab

589 g Schlacke mit 4,05 Gew.-% Pb
363 g Blei mit 99,7 Gew.-% Pb.

Damit errechnet sich ein Bleiverlust von nur 21 g entsprechend 5,2 % vom Vorlauf.

Man sieht leicht ein, daß unter $SO_2$-freier Gasatmosphäre die Pb-Gehalte der Schlacke auf die gleichen Werte gesenkt werden können wie unter einer Gasatmosphäre mit 20 Vol.-% $SO_2$ und daß die Bleiverflüchtigung um den Faktor 5 niedriger ist.

2) In dem vorbeschriebenen Versuchsreaktor wurden in einem Bleibad von 2,351 t Konzentratpellets mit 53,2 Gew.-% Pb in der Trockenanalyse und 7,61 Gew.-% Nässe in einer Menge von 2,85 t/h kontinuierlich mit Sauerstoff bei einer Temperatur von 1 080 °C verblasen, wobei eine Primärschlacke von 65,2 Gew.-% Pb anfiel. Die Bleischmelze enthielt 0,3 Gew.-% S.

Nach Chargieren von insgesamt 4,820 t Pellets mit einem Pb-Inhalt von 2,369 t war der Ofen mit Schlacke und Blei gefüllt.

Nunmehr wurde die Sauerstoffzufuhr unterbrochen und ein Kohlenstaub-Stickstoff-Gemisch in einer Menge von 1 kg/min Kohle durch 2 Lanzen in die Schlackenschicht geblasen, wobei das 1,5-fache der stöchiometrischen notwendigen Kohlemenge verwendet wurde. Die Temperatur während der Reduktion betrug 1 160 °C.

Nach dem Versuch wurden folgende Produkte erhalten :

1 448 kg Schlacke mit 2,2 Gew.-% Pb
4 198 kg Blei mit 0,2 Gew.-% S.

Damit errechnet sich ein Bleiverlust von 498 kg oder 21,0 % vom Pelletvorlauf.

Man sieht, daß bei dieser Arbeitsweise ein schwefelarmes Blei erhalten und die Bleiverflüchtigung, sofern niedrige Schwefelaktivitäten in der Schmelze herrschen, auf ein geringes Maß beschränkt werden kann.

3) In dem zuvor beschriebenen Versuchsreaktor wurden in einem Bleibad von 2,420 t Konzentratpellets mit 53,2 Gew.-% Pb in der Trockenanalyse und 7,61 Gew.-% Nässe bei einem Durchsatz von 2,65 t/h kontinuierlich mit Sauerstoff bei einer Temperatur von 1 050 °C verblasen. Dabei fiel eine Schlacke mit einem Bleigehalt von 63,2 Gew.-% an, während die Bleischmelze 0,4 Gew.-% S enthielt. Nachdem der Ofen mit Blei und Schlacke angefüllt war, wurde die Sauerstoffzufuhr unterbrochen und mit Hilfe von Düsen Wasserstoffgas von unten in die Schmelze geblasen. Dabei waren die an der Oberseite des Ofens befindlichen Chargieröffnungen von 2 × 100 × 100 mm² geöffnet, während der Ofen unter einem Unterdruck von nur 2 × 10⁻³ bar stand.

Trotz Einblasens von 150 m³/h (Vn) $H_2$-Gas und einem 2-fachen stöchiometrischen Überschuß gelang es nicht, den Bleigehalt der Schlacke unter 55,7 Gew.-% zu senken, dadurch die in den Ofen eingesaugte Falschluft das zunächst reduzierte Blei sofort wieder reoxidiert und verschlackt wurde.

Die Vorteile der Erfindung bestehen darin, daß der Metallgehalt der Schlackenphase durch die Steuerung der Zusammensetzung der Gasphase und der Temperatur in der Reduktionszone wesentlich gesenkt und eine Sulfidierung der entstandenen Metalle verhindert wird. Bei Metallen, deren Sulfide geringe Flüchtigkeit aufweisen, ist es zwar gleichfalls zwingend notwendig, in der Reduktionszone ein niedriges Sauerstoffpotential aufrechtzuhalten, aber es kann von Vorteil sein, einen so hohen $SO_2$-Partialdruck einzustellen, daß bei der Reduktion Metallsulfide entstehen, die eine erheblich geringere Löslichkeit in der Schlacke aufweisen als Metalle. Die Wärmeausnutzung wird wesentlich verbessert, weil der Wärmeinhalt der Gase aus der Reduktionszone, die aus metallurgischen Gründen eine möglichst hohe Temperatur haben muß, und in der ein Reduktionsmittelüberschuß angeboten werden muß, in der Oxidationszone weitgehend ausgenutzt werden kann. Es ist möglich, insbesondere bei schwefel- und eisenarmen Konzentraten, die notwendige Wärme in wirtschaftlicher Weise einzubringen, ohne daß das bei der Reduktion notwendige niedrige Sauerstoffpotential gestört wird.

**Ansprüche**

1. Verfahren zur kontinuierlichen Konvertierung von NE-Metallsulfidkonzentraten in eine flüssige NE-metallreiche Phase und eine Schlackenphase in einem länglichen, liegenden Reaktor, unter einer zonenweise $SO_2$-enthaltenden Gasatmosphäre, wobei sulfidische Konzentrate von Kupfer, Nickel, Antimon, Kobalt und Blei oder deren Mischungen und Zuschläge auf die Schmelze chargiert werden, oxidierende und reduzierende Gase in die Schmelze eingeblasen werden, die NE-Metallreiche Phase und eine NE-metallarme Schlackenphase am entgegengesetzten Ende des Reaktors ausgetragen und die Phasen im Gegenstrom zueinander in im wesentlichen kontinuierlich schichtförmigen Strömen zu den Auslaßenden fließen, mindestens ein Teil des Sauerstoffs durch eine Mehrzahl von unabhängig voneinander gesteuerten und über die Länge der Oxidationszone des Reaktors verteilten Düsen in die Schmelze von unten eingeblasen wird, die feste Beschickung durch eine Mehrzahl von unabhängig voneinander gesteuerten und über eine beträchtliche Länge des Reaktors verteilten Beschickungsvorrichtungen stufenweise in den Reaktor chargiert wird, der Gradient der Sauerstoffaktivität in der Schmelze durch Wahl der örtlichen Zugabe und Steuerung der Mengen des eingeführten Sauerstoffs und festen Materials so eingestellt wird, daß er von einem Maximum für die Erzeugung von NE-metallreichem und eisenarmen Material an dessen Auslaßende in fortschreitender Folge in der Reduktionszone bis zu einem Minimum für die Erzeugung von NE-metallarmer Schlackenphase an deren Auslaßende abnimmt, mit dem Sauerstoff gasförmige und/oder flüssige Schutzmedien in gesteuerten Mengen zum Schutz der Düsen und der umgebenden Auskleidung und zur Hilfe für die Steuerung der Prozeßtemperatur in die Schmelze eingeblasen wird, und die in die Schmelze eingeblasenen Gasmengen so geregelt werden, daß eine für einen guten Stoffaustausch ausreichende Turbulenz im Bad entsteht, ohne daß die schichtförmige Strömung der Phasen und der Gradient der Sauerstoffaktivität im wesentlichen gestört wird, dadurch gekennzeichnet, daß die Gasatmosphäre im Reaktor im Gegenstrom zu der Strömungsrichtung der Schlackenphase geführt und das Abgas am Auslaßende der NE-metallreichen Phase aus dem Reaktor abgezogen wird.

2. Verfahren nach Anspruch 1, dadurch gekennzeichnet, daß mindestens in der Reduktionszone Brennstoffe in die Schmelze eingeblasen werden, der Sauerstoffpartialdruck in der Gasatmosphäre über der Reduktionszone unter $10^{-3}$ bar, vorzugsweise unter $10^{-8}$ bar, gehalten wird und kein $SO_2$ als Schutzgas in die Reduktionszone eingeblasen wird.

3. Verfahren nach Anspruch 1 oder 2, dadurch gekennzeichnet, daß zwischen der Reduktionszone und der Oxidationszone eine Beruhigungszone geschaltet ist, in die kein Gas in die Schmelze eingeblasen wird.

4. Verfahren nach den Ansprüchen 1 bis 3, dadurch gekennzeichnet, daß bei der Verarbeitung von sulfidischen Blei- oder Antimonkonzentraten das im Flugstaub enthaltene Blei- oder Antimonsulfid in der Abgasleitung und/oder Abgaskühlung durch Zumischung von sauerstoffhaltigen Gasen bei Temperaturen von 950 bis 450 °C überwiegend zu Bleisulfat oder Antimonoxid und Antimonsulfat oxidiert, und der abgeschiedene Flugstaub mit dem Blei- oder Antimonkonzentrat in einer Menge von 10 bis 30 Gew.-%, bezogen auf den Einsatz, und eventuell unter Zusatz von anderen metallsulfathaltigen Stoffen gemischt wird.

5. Verfahren nach den Ansprüchen 1 bis 4, dadurch gekennzeichnet, daß die Konzentrate sowie eventuell Zuschlagstoffe vor dem Einsatz in den Reaktor kompaktiert werden.

**Claims**

1. A continous process of converting non-ferrous metal sulfide concentrates to form a liquid phase which is rich in non-ferrous metal and a slag phase in an elongated horizontal reactor under a gas atmosphere which comprises $SO_2$-containing zones, in which concentrates of sulfides of copper, nickel, antimony, cobalt or lead or mixtures thereof and admixtures are charged onto a molten bath, oxidizing and reducing gases are blown into the molten bath, the phase having a high non-ferrous metal content and a slag phase having a low non-ferrous metal content are discharged at opposite ends of the reactor, the phases are caused to flow countercurrently in the form of substantially continuous layers to the respective outlet ends of the reactor, at least part of the oxygen is blown into the molten bath from below through a plurality of independently regulated nozzles spaced apart along the oxidizing zone of the reactor, the solids are charged stagewise into the reactor through a plurality of feeders, which are disposed at separate locations spaced apart along a considerable length of the reactor and are controlled independently of each other, the locations and the rate at which oxygen and solids are fed are selected so that the oxygen activity in the molten bath has a maximum at the outlet end where the phase is discharged which has a high non-ferrous metal content and a low iron content, in order to promote the production of said phase, and decreases progressively in the reducing zone to a minimum at the outlet end where the slag phase is discharged which has a low non-ferrous metal content, in order to promote the production of said slag phase, gaseous and/or liquid protective media are blown into the molten bath at controlled rates with the oxygen in order to protect the nozzles and the lining which surrounds the nozzles and to assist the control of the processing temperature, and the rates at which gas is blown into the molten bath are controlled so that an agitation which is sufficient for an effective mass transfer is created in the bath whereas the layers formed by the flowing phases and the gradient of oxygen activity are substantially maintained, characterized in that the gas atmosphere in the reactor is caused to flow countercurrently to the slag phase and the exhaust gas is withdrawn from the reactor at the same end as the phase which has a high non-ferrous metal content.

2. A process according to claim 1, characterized in that fuel is blown into the molten bath at least in the reducing zone, an oxygen partial pressure below $10^{-3}$ bar, preferably below $10^{-8}$ bar, is maintained in the gas atmosphere over the reducing zone, and $SO_2$ is not blown as a protective gas into the reducing zone.

3. A process according to claim 1 or 2, characterized in that a stilling zone is provided between the reducing zone and the oxidizing zone and no gas is blown into the molten bath in said stilling zone.

4. A process according to claims 1 to 3, characterized in that in the processing of lead sulfide concentrates or antimony sulfide concentrates, most of the lead sulfide or antimony sulfide contained in the flue dust is oxidized to lead sulfate or antimony oxide and antimony sulfate in the exhaust gas conduit and/or exhaust gas cooler by an admixing of oxygen-containing gases at temperatures of 950 to 450 °C, and the flue dust which is separated is admixed in an amount of 10-30 % by weight, based on the charged solids, to the lead concentrate or antimony concentrate and other metal sulfate-containing materials, if desired.

5. A process according to claims 1 to 4, characterized in that the concentrates and any admixtures are compacted before being charged into the reactor.

**Revendications**

1. Procédé de transformation en continu de concentrés de sulfures de métaux non ferreux en une phase liquide riche en métaux non ferreux et en une phase de laitier, dans un réacteur couché suivant la direction longitudinale, sous des atmosphères gazeuses contenant du $SO_2$ par zones, qui consiste à charger des concentrés sulfureux de cuivre, de nickel, d'antimoine, de cobalt et de plomb, ou leurs mélanges et des additifs sur la masse fondue, à insuffler des gaz oxydants et réducteurs dans la masse fondue, à soutirer la phase riche en métaux non ferreux et la phase de laitier pauvre en métaux non ferreux, aux extrémités opposées du réacteur, et à faire s'écouler les phases à contre-courant l'une de l'autre en des courants essentiellement continus formant des couches, vers les extrémités de sortie, à insuffler par le bas dans la masse fondue au moins une partie de l'oxygène par une pluralité de buses, commandées indépendamment les unes des autres et réparties sur la longueur de la zone d'oxydation du réacteur, à charger par palier dans le réacteur le chargement solide par une pluralité de dispositifs de chargement, commandés indépendamment les uns des autres et répartis sur une longueur notable du réacteur, à régler le gradient de l'activité en oxygène dans la masse fondue, en choisissant les points d'introduction locaux et en réglant les quantités d'oxygène et de matière solide engagées de manière à ce que le gradient diminue progressivement dans la zone de réduction, d'un maximum pour l'obtention d'une matière riche en métal non ferreux et pauvre en fer à l'extrémité de sortie de cette matière, à un minimum pour l'obtention d'une phase de laitier pauvre en métaux non ferreux à l'extrémité de sortie de cette phase, à insuffler dans la masse fondue avec l'oxygène, des agents de protection gazeux et/ou liquides, en des quantités réglées pour protéger les buses et le revêtement environnant et pour aider à maîtriser la température du processus, et à régler les quantités de gaz insufflées dans la masse fondue de manière à obtenir dans le bain une turbulence suffisante pour avoir un bon transfert de matières sans que l'écoulement sous forme de couches des phases et le gradient de l'activité en oxygène soient, pour l'essentiel, perturbés, caractérisé en ce qu'il consiste à envoyer l'atmosphère gazeuse du réacteur à contre-courant de la direction d'écoulement de la phase de laitier, et à soutirer du réacteur du gaz résiduaire à l'extrémité de sortie de la phase riche en métal non ferreux.

2. Procédé suivant la revendication 1, caractérisé en ce qu'il consiste à insuffler du combustible dans la masse fondue au moins dans la zone de réduction, à maintenir la pression partielle d'oxygène dans l'atmosphère gazeuse au-dessus de la zone de réduction à une valeur inférieure à $10^{-3}$ bars et, de préférence à une valeur inférieure à $10^{-8}$ bars, et à ne pas insuffler de $SO_2$ comme gaz de protection dans la zone de réduction.

3. Procédé suivant la revendication 1 ou 2, caractérisé en ce qu'il consiste à interposer entre la zone de réduction et la zone d'oxydation une zone de tranquillisation dans laquelle on n'insuffle pas de gaz dans la masse fondue.

4. Procédé suivant l'une des revendications 1 à 3, caractérisé en ce qu'il consiste, pour la transformation de concentrés sulfureux de plomb ou d'antimoine, à oxyder principalement en sulfate de plomb ou en oxyde d'antimoine et en sulfate de plomb, le sulfure de plomb ou d'antimoine contenu dans la cendre volante dans le conduit pour le gaz résiduaire et/ou dans le dispositif de refroidissement de ce gaz résiduaire, par addition de gaz contenant de l'oxygène à des températures de 950 à 450 °C, et à mélanger, éventuellement avec addition d'autres matières contenant des sulfates métalliques, la cendre volante séparée au concentré de plomb ou d'antimoine, à raison de 10 à 30 % en poids par rapport à la charge.

5. Procédé suivant l'une des revendications 1 à 4, caractérisé en ce qu'il consiste à compacter les concentrés ainsi qu'éventuellement les additifs, avant de les charger dans le réacteur.